# EUROPEAN PATENT APPLICATION

(11) **EP 4 814 705 A1**
(43) Date of publication of application: **30.09.2026**
(21) Application number: 25167141.8
(22) Date of filing: 28.03.2025
(51) Int. Cl.: G06F 8/72, G06F 8/35

(54) **METHOD AND SYSTEM FOR DETERMINING AN UPDATED SOFTWARE ARCHITECTURE FOR A SYSTEM**

(71) Applicant: British Telecommunications Public Limited Company, London E1 8EE (GB)
(72) Inventor: NOPPEN, Johannes, London, El 8EE (GB); ZIOLKOWSKI, Adam, London, El 8EE (GB); JOHNS, Jack, London, El 8EE (GB)
(74) Representative: British Telecommunications public limited company Intellectual Property Department

(57) **Abstract**

A method (300), and a data processing system, DPS (110), for determining an updated software architecture (112) from an initial software architecture. The method comprises receiving (302), at the DPS (110), data (102) specifying the initial software architecture; receiving (304), at the DPS (110), a Software Quality Model, SQM (104), that defines attributes for assessing the quality of a software architecture for a system; receiving (306), at the DPS (110), a set of desired attributes for the updated software architecture (112), the desired attributes being attributes specified in the SQM (104); modelling (308), by the DPS (110), one or more transformed software architectures (320, 330, 340) based on the initial software architecture and one or more architectural design patterns, wherein the one or more architectural design patterns are stored in a memory location (108) that is communicatively coupled to the DPS (110); calculating (310), by the DPS (110), a quality attribute (321, 331, 341) for each of the transformed software architectures (320, 330, 340) using the SQM (104) and the set of desired attributes; selecting (312), by the DPS (110), one of the transformed software architectures based on the quality attributes; and outputting (316), by the DPS (110), the selected software architecture as the updated software architecture (112) for the system.

## Description

### FIELD

The present disclosure relates to a method and a system for determining an updated software architecture for a system, and more particularly to a method and a data processing system for determining an updated software architecture from an initial software architecture.

### BACKGROUND

Software architecture defines the structure of a software system. This includes defining relationships between components of a system, and how the components work together or are related to perform a function of the system. In other words, the software architecture defines a set of rules that can be used to create and implement software that meets a particular goal or objective.

Ensuring that the software architecture for a system is optimal for a particular situation is one of the most important parts of product development. A software architecture that is optimised tends to cause the components of a system to work together efficiently to deliver functionality that achieves the goal or objective. A non-optimised or poor software architecture tends to severely impact the quality of a system in meeting the goal or objective, potentially hindering it in several ways, such as performance, or the system's ability to adapt to new goals or objectives. A non-optimised software architecture tends to occur when a legacy or outdated software architecture is used on a system that has new requirements, goals, or objectives.

In order to maintain a software architecture after it has been deployed, it is often required for the initial software architecture to be changed, in order to improve core attributes of a legacy software architecture, such as speed or stability, while retaining its core functionality. Changing software architecture in this manner is also known as software refactoring or architectural transformation. Software refactoring conventionally involves in-depth analysis, rearchitecting and comprehensive reimplementation of the software architecture on the system, while ensuring functional equivalence upon completion.

### SUMMARY

In an aspect, there is provided a method for determining an updated software architecture from an initial software architecture. The method comprises receiving, at a Data Processing System (DPS), data specifying the initial software architecture; receiving, at the DPS, a Software Quality Model (SQM) that defines attributes for assessing the quality of a software architecture for a system; receiving, at the DPS, a set of desired attributes for the updated software architecture, the desired attributes being attributes specified in the SQM; modelling, by the DPS, one or more transformed software architectures based on the initial software architecture and on one or more architectural design patterns, wherein the one or more architectural design patterns are stored in a memory location that is communicatively coupled to the DPS; calculating, by the DPS, a quality attribute for each of the transformed software architectures using the SQM and the set of desired attributes; selecting, by the DPS, one of the transformed software architectures based on the quality attributes; and outputting, by the DPS, the selected software architecture as the updated software architecture for the system.

The step of modelling may comprise transforming, by the DPS, the initial software architecture into the one or more transformed software architectures based on the one or more architectural design patterns.

The method may be a computer-implemented method.

The one or more transformed software architectures may be a plurality of transformed software architectures.

The one or more architectural design patterns may be a plurality of architectural design patterns.

The data specifying the initial software architecture may be provided in the format of a graph of nodes and edges, for example a directed graph of nodes and edges.

The directed graph may also be used by an operator to gain an insight into the software architecture.

The directed graph may define one or more semantic markers attached to one or more respective components of the system.

The semantic markers may comprise metadata that defines context and/or roles of the respective components to which they are attached.

The metadata may be represented as a property of a node or expressed as a separate node in the directed graph with a relationship back to the respective node.

The method may further comprise identifying, by the DPS, using the semantic markers, an area of the initial software architecture to apply the architectural design patterns to.

In other words, the DPS may use the semantic markers in conjunction with the architectural design pattern to transform, or mutate, the software architecture accordingly.

The step of identifying an area of the initial software architecture may be performed by the DPS using a machine learning algorithm.

The step of identifying an area of the initial software architecture may include using sub-graph matching and graph search approach to situate the architectural design pattern against anchor points provided by the semantic markers.

The step of identifying an area of the initial software architecture may include using historical information about the circumstances in which architectural design patterns have been previously applied, to determine situations where they can be applied.

The step of identifying an area of the initial software architecture may include feeding information from the graph, along with the descriptions of the architectural design pattern, to a Large Language Model (LLM) or agent, and have the LLM or agent provide information around the matching process.

The semantic markers may follow a common ontology.

The semantic markers may give the DPS extra information and context to work with. The semantic markers may be the result of either ground truth information provided by a user, or from an automated identification process that has been performed and where the graph has been labelled (where the information might have a level of uncertainty). An example of an automated processes that might label the directed graph is a pattern detection or sub-graph matching algorithm to detect a model-view-controller design pattern, where the roles of model, view and controller get labelled against the relevant nodes as semantic markers.

The common ontology may be a universal ontology. The semantic markers may follow a universal ontology.

Each of the architectural design patterns may include one or more attributes selected from the group of attributes consisting of: a name, a structural definition, a situation description of where an architectural design pattern might be appropriate, a description of the intent of the architectural design pattern.

The method my further comprise determining, by the DPS, whether the selected software architecture meets one or more predefined criteria.

If the selected software architecture meets the one or more predefined criteria, the method may comprise performing the step of outputting the selected software architecture as the updated software architecture.

If the selected software architecture does not meet the one or more predefined criteria, the method may comprise iterating one or more times steps (a)-(d) until the selected software architecture does meet the one or more predefined criteria and then performing the step of outputting the selected software architecture as the updated software architecture, wherein
step (a) comprises modelling one or more transformed selected software architectures based on the selected software architecture and the one or more architectural design patterns, for example by transforming the selected software architecture into one or more transformed selected software architectures based on the one or more architectural design patterns,
step (b) comprises calculating a quality attribute for each of the transformed selected software architectures using the SQM and the set of desired attributes;
step (c) comprises selecting one of the transformed selected software architectures based on the quality attributes;
step (d) comprises determining whether the selected software architecture meets the one or more predefined criteria.

The pre-defined criteria may specify that a difference between the quality attributes of the selected software architecture of the current iteration and the previous iteration need to be less than a threshold value.

The threshold value may be, for example, 5%, or 1%, or 0.1%.

The iterative process may comprise using a genetic algorithm.

In other words, the DPS may perform multiple stages of genetic optimisation, starting with the current architecture and using a pattern repository to generate new architectures, finding the best 'genetic mutation' and then using that as the starting point for the next stage, until the quality improvements are negligible or fall below a pre-determined threshold.

The step of modelling the one or more transformed software architectures may comprise modelling a transformed software architecture to have a structure of the initial software architecture with one or more of its parts replaced by one or more architectural design patterns from the repository.

The step of transforming the initial software architecture into one or more transformed software architectures may comprise replacing one or more parts of the initial software architecture with one or more architectural design patterns from the repository.

The step of transforming the selected software architecture into one or more transformed software architectures may comprise replacing parts of the selected software architecture with architectural design patterns from the repository.

The method may further comprise outputting, by the DPS, a changelog that defines differences between the initial software architecture and the updated software architecture.

The updated software architecture may be a new architecture that tends to be optimised for the desired quality attributes. A changelog of differences between the initial software architecture and the updated software architecture may also be output, ready to be utilised by either an automated architectural transformation tool or a manual architectural transformation process.

The benefits of such a method over other automated architectural transformation tools tend to be that the iterative process (or genetic algorithm) used provide an architecture with multiple generations of transformations, thus taking advantage of multiple architectural design patterns and considering many options simultaneously. Additionally, each potential transformation tends to be guided by the quality attributes that have been specifically selected for the context of the system, making them more relevant than other solutions.

The updated software architecture may be output to a transformation tool for use in a transformation processes, wherein the transformation process comprises replacing, in the system, the initial software architecture with the updated software architecture.

In a further aspect, there is provided a method for software refactoring a system operating on an initial software architecture, the method comprising determining, by a Data Processing System (DPS), an updated software architecture for the system by performing the method of the first aspect; receiving, by a transformation tool, the updated software architecture; replacing, by the transformation tool, the initial software architecture with the updated software architecture on the system; and verifying, by the transformation tool, the integrity of the updated software architecture on the system.

Software refactoring may also be referred to as architectural transformation.

In a further aspect, there is provided a data processing system (DPS) for determining an updated software architecture from an initial software architecture, the DPS being configured to receive data specifying the initial software architecture; receive a Software Quality Model (SQM), that defines attributes for assessing the quality of a software architecture for a system; receive a set of desired attributes for the updated software architecture, the desired attributes being attributes specified in the SQM; model one or more transformed software architectures based on the initial software architecture and on one or more architectural design patterns, wherein the one or more architectural design patterns are stored in a memory location that is communicatively coupled to the DPS; calculate a quality attribute for each of the transformed software architectures using the SQM and the set of desired attributes; select one of the transformed software architectures based on the quality attributes; and output the selected software architecture as the updated software architecture for the system.

The data processing system may be configured to perform any of the methods or method steps disclosed herein.

In a further aspect, there is provided a computer program comprising instructions which, when the computer program is executed by a computer, cause the computer to carry out the method of any of the preceding aspects.

In a further aspect, there is provided a computer-readable data carrier having stored thereon the computer program of the preceding aspect.

In a further aspect, there is provided a data carrier signal carrying the computer program of any preceding aspect.

### BRIEF DESCRIPTION OF THE FIGURES

Aspects of the present disclosure will now be described by way of example with reference to the accompanying figures. In the figures:
Figure 1 is a data flow diagram showing a data flow to and from a data processing system;
Figure 2 is an example of a directed graph;
Figure 3 is a method for determining an updated software architecture;
Figure 4 is a data flow diagram showing a data flow and certain method steps for determining an updated software architecture; and
Figure 5 schematically illustrates an example data processing system.

### DETAILED DESCRIPTION

Software systems over their lifetime typically need to be updated to meet new quality goals, such as improved response time, scalability, etc. These improvements typically are performed at the component level, but they can be challenging and labour-intensive due to the alternative designs that need to be explored and therefore making improvement at the component level is not always successful. The present disclosure seeks to solve this and other problems by providing a systematic mechanism to identify and evaluate architectural alternatives and solutions to increase the chance of achieving the new quality goals.

This disclosure expedites the architectural redesign process by refactoring the current architectural design of a system, ready for an architectural transformation. It does this using three inputs: the initial software architecture, a software quality model that defines attributes for assessing the quality of a software architecture for a system, for example by defining relationships between tangible, measurable properties of a system and their related quality attributes; and a set of criteria that define attributes of the updated software architecture from the attributes present in the software quality model.

The data processing system, which may also be referred to as an architectural optimiser, takes these inputs and optimises the initial software architecture, using a pattern repository, to generate new updated software architectures that are improved compared to the initial software architecture. The data processing system can perform a first transformation on the software architecture and then use the first transformation as the starting point for a subsequent transformation and iteratively continue this process until any quality improvements between the transformations are negligible. In this manner, the data processing system can find an 'optimal genetic mutation' for the updated software architecture.

The updated software architecture is a new architecture that tends to be optimised for the desired quality attributes of the system. In other words, the updated software architecture tends to cause the components of the system to more efficiently function together in order to achieve the goals or objectives of the system.

In some embodiments, a changelog of differences between the initial software architecture and the updated software architecture is also output. The changelog can be utilised by either an automated architectural transformation tool or a manual architectural transformation process.

Advantageously, the system and method described herein tend to provide a new architecture that has been determined based on multiple generations of transformations, thus taking advantage of multiple architectural design patterns and considering many options simultaneously. Each potential transformation tends to be guided by the quality attributes that have been specifically selected for the context of the system, making them more relevant than other solutions. Thus, the disclosure tends to provide an updated software architecture for a system, without the cost and complexity of manually analysing and designing a new software architecture for the system.

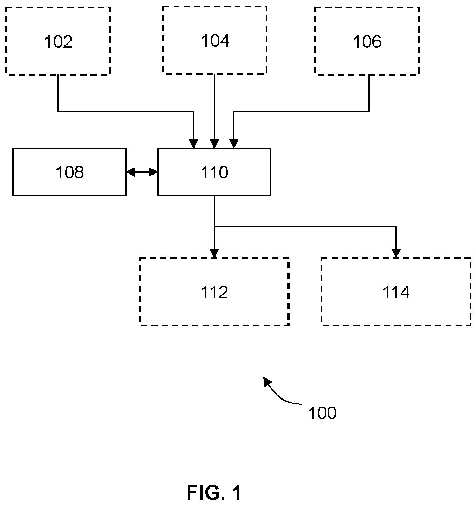

Figure 1 is a data flow diagram 100 showing a data processing system (DPS) 110 in accordance with an embodiment. The DPS 110 receives data 102 specifying an initial software architecture, a software quality model 104, and a set of desired attributes 106. The DPS 110 is communicatively coupled to a memory location 108 comprising a pattern repository. The DPS 110 outputs an updated software architecture 112 and a changelog 114.

The data 102 specifying the initial software architecture may be manually input into the DPS 110 or may be input into the DPS 110 as part of an automated process. The data 102 may be input into the DPS 110 from, for example, a computer, a memory location, a computer program, an Internet location, etc.

The Software Quality Model (SQM) 104 defines attributes for assessing the quality of a software architecture for a system. The SQM 104 achieves this by defining relationships between measurable properties of a system and their related attributes. Software quality can be modelled as a set of specific attributes that when considered together, form a cohesive view of quality within a system. Examples could include performance, scalability, maintainability, etc. These attributes may be interconnected, with certain attributes having positive and negative correlations with one another and, in some cases, they can even be mutually exclusive. The software quality model is a representation of these attributes, their relationships with one another and to the tangible, measurable properties of software systems. The model can be represented by using, for example, graphs, lists and other data structures.

The set of desired attributes 106 define attributes for the updated software architecture. The set of desired attributes 106 are attributes specified in the SQM 104. In this embodiment, the set of desired attributes 106 are defined by a computer program or autonomous process. However, in other embodiments, the set of desired attributes 106 are defined by a human architect.

The set of desired attributes 106 may be a subset of the attributes present in the SQM 104 that have been specifically selected for the system and the context it is to operate in. The set of desired attributes 106 may be the guiding principles of how to transform the initial software architecture, by prioritising transformations that positively impact the set of desired attributes 106. The set of desired attributes 106 can be supplied in any appropriate format, for example as a list.

The set of desired attributes 106 are specifically selected for the system and the context it must operate in. The set of desired attributes 106 may be used by the method to transform the initial software architecture, by prioritising transformations that positively impact the set of desired attributes 106, as is discussed in more detail below. The desired attributes 106 can be supplied in any appropriate data structure or format, for example a list.

The pattern repository in the memory location 108 (herein referred to as the pattern repository 108) comprises predefined architectural design patterns for software architectures. The pattern repository 108 may also define or specify, for each architectural design pattern, the effect or effects that that architectural design pattern has on one or more of the set of desired attributes 106. An architectural design pattern may be considered to be a reusable solution to a common problem in software design. In this manner, an architectural design pattern can be used as a template for solving a particular architectural design problem. Each architectural design pattern is represented using the same common ontology used to represent the initial architecture, including relevant semantic markers.

In these embodiments, the architectural design patterns may use the same language and syntax as the initial software architecture. This tends to facilitate application of the architectural design patterns to the initial software architecture.

Each of the architectural design patterns included in the pattern repository 108 may include one or more of the following: a name, a structural definition, a situation description of where an architectural design pattern might be appropriate, and/or a description of the intent of the architectural design pattern.

The updated software architecture 112 is a new architecture that tends to be optimised for the desired quality attributes 106.

The changelog 114 is a log of the differences between the initial software architecture and the updated software architecture 112.

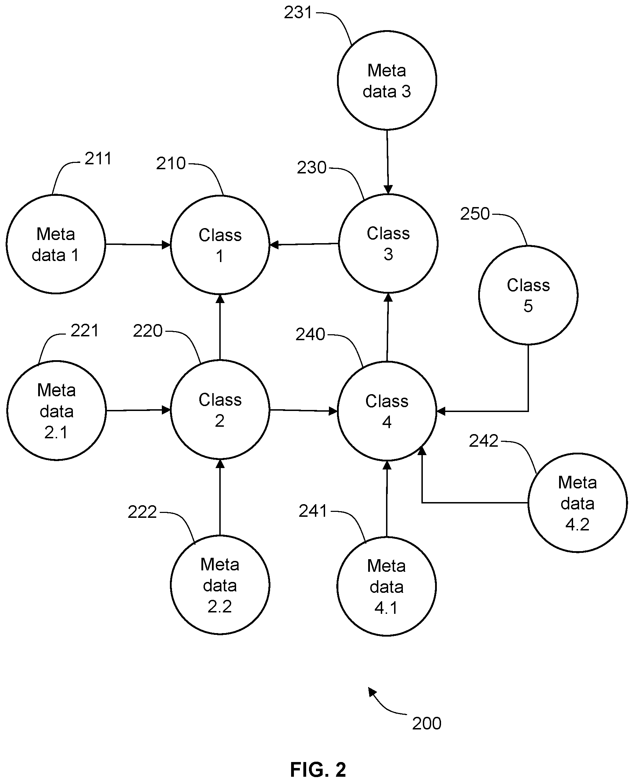

In this embodiment, the data 102 that specifies the initial software architecture is provided in the format of a directed graph of nodes and edges. Figure 2 is an example of a directed graph 200 in accordance with this embodiment.

As shown in Figure 2, the directed graph 200 includes components in the form of nodes 210, 220, 230, 240, 250 and semantic markers 211, 221, 222, 231, 241, 242. The nodes 210, 220, 230, 240, 250 and the semantic markers 211, 221, 222, 231, 241, 242 are connected together by directed edges, i.e. the arrows, to form the directed graph 200.

The components of a system and their relationships to one another can form a graph of entities and relationships with direction between them. The directed graph 200 that specifies the initial software architecture, and the architectural design patterns, tend to follow a common ontology and thus tend to be suitable for processing in a digital system. The directed graph 200 may also facilitate an operator to have an insight into the software architecture.

The directed graph 200 defines semantic markers 211, 221, 222, 231, 241, 242 attached to components of the system in the form of nodes 210, 220, 230, 240, 250. The semantic markers 211, 221, 222, 231, 241, 242 comprise metadata that defines context and roles of the respective components to which they are attached. The semantic markers 211, 221, 222, 231, 241, 242 follow a common ontology.

The metadata could alternatively be represented as a property of a node or could be expressed as a separate node in the directed graph 200 with a relationship back to the respective node.

As discussed further below, the DPS 110 is configured to use the semantic markers 211, 221, 222, 231, 241, 242 in the transformation of the software architecture.

The semantic markers 211, 221, 222, 231, 241, 242 give the DPS 110 extra information and context to work with. The semantic markers 211, 221, 222, 231, 241, 242 are the result of either ground truth information provided by a user, or information generated from an automated identification process that has been performed and where the graph 200 has been labelled. An example of an automated processes that might label the directed graph 200 is a pattern detection or sub-graph matching algorithm to detect a model-view-controller design pattern, where the roles of model, view and controller get labelled against the relevant nodes as semantic markers.

In order to determine the updated software architecture, the disclosure includes a method that utilises the semantic markers of the directed graph and the semantic markers of the architectural design patterns in the pattern repository, to evolve or improve the initial software architecture.

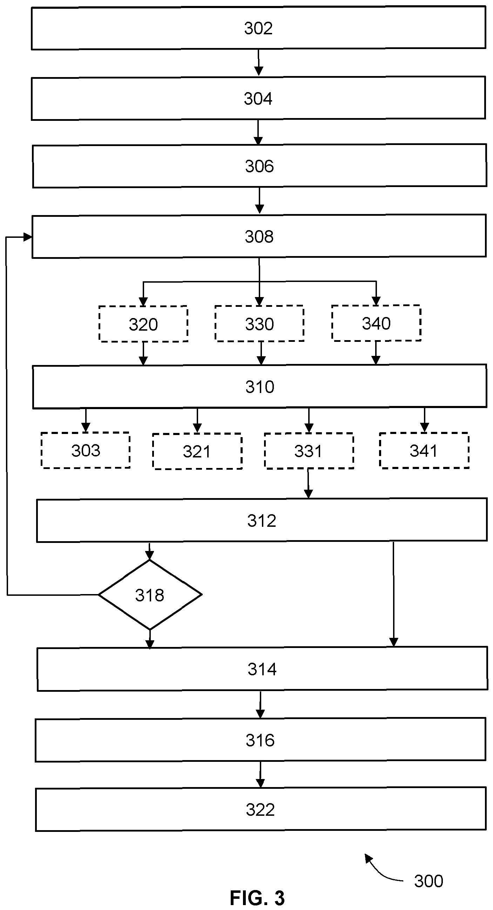

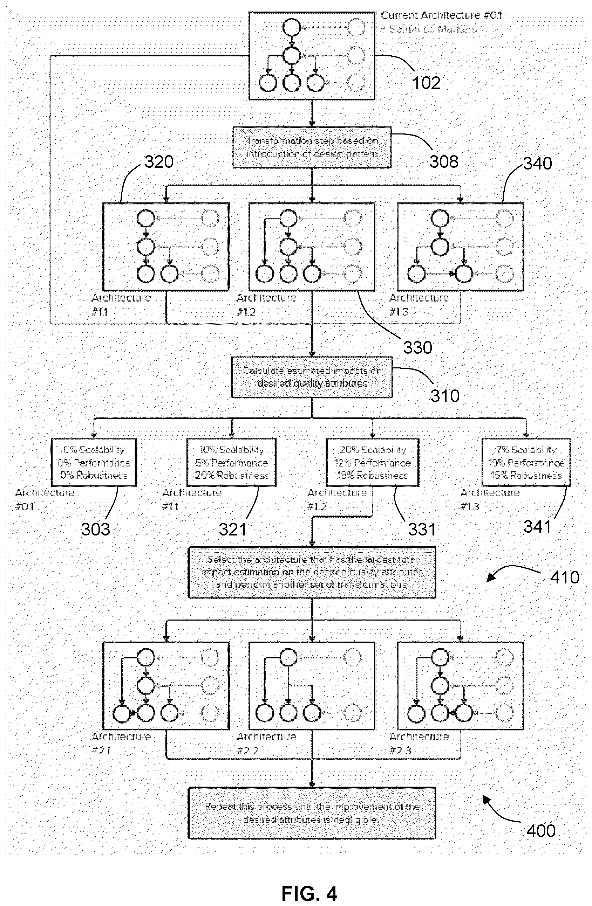

Figure 3 is a process flow chart showing certain steps of an embodiment of a method 300 for determining an updated software architecture. Figure 4 is a data flow diagram 400 showing certain steps of the method 300 and certain data flows. The method 300 is described below with reference to Figures 3 and 4.

In a step 302, the DPS 110 receives the data 102 specifying the initial software architecture. The DPS may receive the data 102 from, for example, an automated process outside of the DPS 110, or a computer, or a computer program, etc.

In a step 304, the DPS 110 receives the SQM 104. The DPS may receive the SQM 104 from, for example, an automated process outside of the DPS 110, or a computer, or a computer program, etc.

In a step 306, the DPS 110 receives the set of desired attributes 106 that define desired attributes for the updated software architecture 112. The DPS may receive the set of desired attributes 106 from, for example, an automated process outside of the DPS 110, or a computer, or a computer program, etc.

In a step 308, the DPS 110 models a plurality of transformed software architectures 320, 330, 340. The modelling of the transformed software architectures may comprise transforming the data 102 into the plurality of transformed software architectures 320, 330, 340. In this example, at step 308, the DPS 110 models a first transformed software architecture 320, a second transformed software architecture 330, and a third transformed software architecture 340.

A purpose of the modelling or transformation step 308 is to determine at least one improvement or improved software architecture compared to the initial software architecture. To achieve this, the DPS 110 uses one or more architectural design patterns that are stored in the pattern repository 108.

In particular, in this embodiment, the modelling or transformation step 308 includes identifying, by the DPS 110 using the semantic markers 211, 221, 222, 231, 241, 242 of the directed graph 200, at least one area of the initial software architecture to apply the architectural design patterns to. The DPS 110 then replaces parts of the initial software architecture with architectural design patterns from the pattern repository 108.

Identifying at least one area of the initial software architecture may be performed by the DPS 110 using a machine learning algorithm.

Identifying at least one area of the initial software architecture may include using sub-graph matching and graph search approach to situate the architectural design patterns against anchor points provided by the semantic markers 211, 221, 222, 231, 241, 242.

Identifying at least one area of the initial software architecture may include using historical information about the circumstances in which architectural design patterns have been previously applied, to determine situations where they can be applied.

Identifying at least one area of the initial software architecture may include feeding information from the directed graph, along with the descriptions of the architectural design patterns, to a Large Language Model (LLM) or agent and have the LLM or agent provide information of the matching process.

In a step 310, the DPS 110 calculates a quality attribute 321, 331, 341 for each of the transformed software architectures 320, 330, 340, by using the SQM 104 and the set of desired attributes 106. In this example, the calculation step 310 calculates a first quality attribute 321 that corresponds to the first transformed software architecture 320, a second quality attribute 331 that corresponds to the second transformed software architecture 330, and a third quality attribute 341 that corresponds to the third transformed software architecture 340.

In this embodiment, the DPS 110 also calculates a quality attribute 303 for the initial software architecture, based on the data 102. The quality attribute 303 for the initial software architecture is used as a reference or benchmark to measure the effectiveness of the quality attributes 321, 331, 341 of the transformed software architectures 320, 330, 340 against. Thus, the quality attributes 321, 331, 341 can be expressed as a percentage.

In this embodiment, each of the quality attributes 321, 331, 341 represent the effectiveness of the architectural design patterns that have been applied to each of the respective transformed software architectures 320, 330, 340 in relation to the initial software architecture when considering the set of desired attributes 106. In this example the set of desired attributes 106 include a scalability rating, a performance rating, and a robustness rating. The results of the calculation step 310 are shown in Table 1 below.

**Table 1**

| **Set of Desired Attributes** | **Software Architecture** | | | |
|---|---|---|---|---|
| | Initial | First Transformed | Second Transformed | Third Transformed |
| Scalability | 0% | 10% | 20% | 7% |
| Performance | 0% | 5% | 12% | 10% |
| Robustness | 0% | 20% | 18% | 15% |
| Total impact | | 35% | 50% | 42% |

Thus, at step 310, the impact upon the set of desired attributes 106 by each of the transformed software architectures 320, 330, 340 is calculated, using definitive metrics and their relationships to the quality attributes, as encoded by the SQM 104. The transformed software architecture 320, 330, 340 with the largest total impact is the most improved updated software architecture.

In a step 312, the DPS 110 selects one of the transformed software architectures 320, 330, 340 based on the calculated quality attribute values 321, 331, 341. In this embodiment, the DPS 110 selects the transformed software architecture 320, 330, 340 that yields the highest total quality attribute 321, 331, 341 as a percentage. In this example, the second quality attribute 331 of the second transformed software architecture 330 yields the highest total impact of 50%, and is thus selected by the DPS 110 at step 312.

In a step 314, the DPS 110 outputs the selected software architecture as an updated software architecture 112 for the system.

In a step 316, the DPS 110 outputs a changelog 114 that defines the differences between the initial software architecture and the updated software architecture 112.

In this manner, the DPS 110 has determined an updated software architecture that provides a 50% improvement over the initial software architecture. In this embodiment, in order to further improve the software architecture, the method 300 may further comprise a step 318 that is performed after the selection step 312, and before the steps 314 and 316.

In the step 318, the DPS 110 determines whether the selected software architecture meets one or more predefined criteria.

If, at step 318, it is determined that the selected software architecture meets the one or more predefined criteria, the DPS proceeds to perform the steps 314 and 316 as described in more detail above.

However, if at step 318 it is determined that the selected software architecture does not meet the one or more predefined criteria, the DPS 110 iteratively performs steps 308, 310, 312 one or more times until the selected software architecture does meet the one or more predefined criteria, at which point the DPS 100 then performs the steps 314 and 316.

The iterative process is shown in Figure 4 as a sub-process 410. In this embodiment, the iterative process includes:
step (a) comprising modelling one or more transformed selected software architectures based on the selected software architecture and the one or more architectural design patterns e.g., transforming the selected software architecture into one or more transformed selected software architectures based on the one or more architectural design patterns,
step (b) comprising calculating a quality attribute for each of the transformed selected software architectures using the SQM 104 and the set of desired attributes 106;
step (c) comprising selecting one of the transformed selected software architectures based on the quality attributes;
step (d) comprising determining whether the selected software architecture meets the one or more predefined criteria.

The DPS 110 can iteratively perform these steps. The first iteration is performed starting from the initial software architecture as specified in the data 102.

In some embodiments, the pre-defined criteria assessed at step 318 may specify that a difference between the quality attributes of the selected software architecture of the current iteration and the previous iteration is less than a threshold value. In this manner, the pre-defined criteria may specify that only when the improvements between each iteration result in a marginal improvement, for example a 1% improvement, will the DPS proceed to perform the steps 314 and 316. In some embodiments, the pre-defined criteria assessed at step 318 may require that a predefined number of iterations is performed, or a predefined amount of time has elapsed since the process was initiated.

A software architecture that has a quality attribute that is less than, for example, 1% more effective than the software architecture of the previous iteration is an indicator that further iterations may deliver only negligible improvements. Thus, over the course of one or more iterations, the effectiveness of the iterations tends to reduce due to an optimal solution being found based on the available architectural design patterns in the pattern repository 108. Thus, eventually, the result of the effectiveness of the iterations will become less than the threshold.

The iterative process may comprise using a genetic algorithm. A genetic algorithm is a type of optimisation algorithm that simulates biological evolution and natural selection by generating a number of options and selecting the best one using a set of restraints. After multiple passes of the algorithm, the resultant solution should be an optimised version of the starting point. In other words, the DPS 110 can perform multiple stages of genetic optimisation, starting with the initial architecture and using the pattern repository 108 to generate new architectures, finding the best 'genetic mutation' and then using that as the starting point for the next stage, until the quality improvements are negligible.

To summarise the method steps 308, 310 and 312, the DPS 110 uses the semantic markers 211, 221, 222, 231, 241, 242 in conjunction with the architectural design patterns and the set of desired attributes 106 to transform, or mutate, the software architecture accordingly. The semantic markers 211, 221, 222, 231, 241, 242 add context and roles to the system modelled in the directed graph 200. These makers act as anchor points for the DPS 110 to identify the correct areas of the software architecture to apply the architectural design patterns to. The DPS 110 can then use the semantic markers 211, 221, 222, 231, 241, 242 in conjunction with the architectural design patterns and quality attributes to mutate the software architecture accordingly.

The updated software architecture 112 is a new architecture that tends to be optimised for the desired quality attributes. The changelog 116 of differences between the initial software architecture and the updated software architecture 112 is also output, ready to be utilised by either an automated architectural transformation tool or a manual architectural transformation process.

Advantageously, the above-described iterative process (for example using genetic algorithms) tends to provide an architecture with multiple generations of transformations, thus taking advantage of multiple architectural design patterns and considering many options simultaneously. Additionally, each potential transformation tends to be guided by the quality attributes that have been specifically selected for the context of the system, making them more relevant than other solutions.

In this embodiment, the updated software architecture 112 is output to a transformation tool for use in a transformation processes.

At a step 322, optionally, a transformation tool performs a transformation process. In the transformation process, the transformation tool replaces or updates, in the system, the initial software architecture with the updated software architecture 112.

The method 300 may be used in conjunction with a method for software refactoring a system operating on an initial software architecture. The method for software refactoring may comprise determining, by the DPS 110, an updated software architecture 112 for the system by performing the method 300. The method for software refactoring may then comprise receiving, by a transformation tool, the updated software architecture; replacing, by the transformation tool, the initial software architecture with the updated software architecture on the system; and verifying, by the transformation tool, the integrity of the updated software architecture on the system.

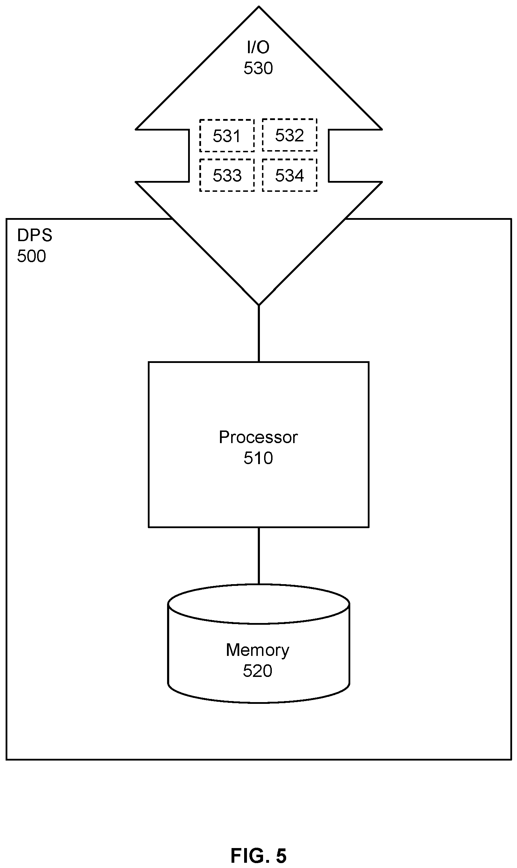

Figure 5 schematically illustrates an example data processing system (DPS) 500 capable of performing any of the methods described above. The DPS 500 comprises a processor 510 operably coupled to both a memory 520 and an interface (I/O) 530.

The memory 520 can optionally comprise computer program instructions which, when executed by the processor 510, cause the data processing system 500 to carry out any of the methods described above.

The interface 530 can optionally comprise one or both of a physical interface 531 configured to receive a data carrier having such instructions stored thereon and a receiver 532 configured to receive a data carrier signal carrying such instructions.

The receiver 532, when present, can be configured to receive messages. It can comprise one or more wireless receiver modules and/or one or more wired receiver modules. The interface 530 can optionally comprise a transmitter 533 configured to transmit messages. The transmitter 533, when present, can comprise one or more wireless transmitter modules and/or one or more wired transmitter modules.

The interface 530 can optionally comprise one or more user interface devices 534.

The preceding description is presented to enable any person skilled in the art to make and use the system and/or perform the method of the disclosure, and is provided in the context of a particular application. Various modifications to the disclosed examples will be readily apparent to those skilled in the art. It is intended that the specification be considered as exemplary only.

The phrase "consisting of" is intended to mean "including only". The word "comprising" is intended to mean "including at least", and therefore includes, in a limiting case, "consisting of".

The terms "top", "bottom", "side", "front", "back", "forward", "rear", "clockwise", "anticlockwise" and other terms describing the orientation of features are not intended to be limiting and, where used, are purely included in order to facilitate the description of the relative location of these features in the context of the accompanying drawings. In use, or during storage, the features may be disposed in other orientations.

Where this application lists one or more method steps, the presence of precursor, follow-on and intervening method steps is not excluded unless such exclusion is explicitly indicated. Similarly, where this application lists one or more components of a device or system, the presence of additional components, whether separate or intervening, is not excluded unless such exclusion is explicitly indicated.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, partially or entirely contemporaneously with, or after another operation is in accordance with the described embodiments. For example, steps presented as occurring in series can, given appropriate means (e.g. parallel processors), be implemented in parallel, and vice-versa.

The scope of the present disclosure includes any novel features or combination of features disclosed herein. The applicant hereby gives notice that new claims may be formulated to such features or combination of features during prosecution of this application or of any further applications derived therefrom. In particular, with reference to the appended claims, features from dependent claims may be combined with those of the independent claims and features from respective independent claims may be combined in any appropriate manner and not merely in the specific combinations enumerated in the claims.

Insofar as embodiments of the disclosure described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present disclosure. Such a computer program may be embodied as source code or undergo compilation for implementation on a processing device, apparatus or system or may be embodied as object code, for example.

Such a computer program may be encoded as executable instructions embodied in a carrier medium, non-transitory computer-readable storage device and/or a memory device in machine or device readable form, for example in volatile memory, non-volatile memory, solid-state memory, magnetic memory such as disk or tape, optically or magneto-optically readable memory such as magnetic tape, compact disk (CD), digital versatile disk (DVD) or other media that are capable of storing code and/or data. Such a computer program may alternatively or additionally be supplied from a remote source embodied in a communications medium such as an electronic signal, radio frequency carrier wave or optical carrier wave. Such carrier media are also envisaged as aspects of the present disclosure.

Such instructions, when executed by a processor (or one or more computers, processors, and/or other devices) may cause the processor (the one or more computers, processors, and/or other devices) to perform at least a portion of the methods described herein.

Where a processor is referred to herein, this is to be understood to refer to a single processor or multiple processors operably connected to one another. Similarly, where a memory is referred to herein, this is to be understood to refer to a single memory or multiple memories operably connected to one another.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, smartphones, tablets, network personal computers (PCs), minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

Resources/computing resources, as referred to herein, comprise time, electrical power, processing power, and memory (both storage and working memory).

User devices can include, without limitation, static user devices such as PCs and mobile user devices such as smartphones, tablets, laptops, and smartwatches.

Receivers and transmitters as described herein may be standalone or may be comprised in transceivers. A communication link as described herein comprises at least one transmitter capable of transmitting data to at least one receiver over one or more wired or wireless communication channels. Wired communication channels can be arranged for electrical or optical transmission. Such a communication link can optionally further comprise one or more relaying transceivers.

User input devices can include, without limitation: microphones, buttons, keypads, touchscreens, touchpads, trackballs, joysticks, mice, gesture control devices and brain control (e.g. electroencephalography, EEG) devices. User output devices can include, without limitation: speakers, buzzers, display screens, projectors, indicator lights, haptic feedback devices and refreshable braille displays. User interface devices can comprise one or more user input devices, one or more user output devices, or both.

## Claims

1. A computer-implemented method for determining an updated software architecture from an initial software architecture, the method comprising:
receiving, at a Data Processing System, DPS, data specifying the initial software architecture;
receiving, at the DPS, a Software Quality Model, SQM, that defines attributes for assessing the quality of a software architecture for a system;
receiving, at the DPS, a set of desired attributes for the updated software architecture, the desired attributes being attributes specified in the SQM;
modelling, by the DPS, one or more transformed software architectures based on the initial software architecture and one or more architectural design patterns, wherein the one or more architectural design patterns are stored in a memory location that is communicatively coupled to the DPS;
calculating, by the DPS, a quality attribute for each of the transformed software architectures using the SQM and the set of desired attributes;
selecting, by the DPS, one of the transformed software architectures based on the quality attributes; and
outputting, by the DPS, the selected software architecture as the updated software architecture for the system.

2. The method of claim 1, wherein the modelling comprises transforming, by the DPS, the initial software architecture into the one or more transformed software architectures based on the one or more architectural design patterns.

3. The method of claim 1 or 2, wherein the data specifying the initial software architecture is provided in the format of a directed graph of nodes and edges.

4. The method of claim 3, wherein the directed graph defines semantic markers attached to components of the system, and wherein, optionally, the semantic markers comprise metadata that defines context and roles of the respective components to which they are attached.

5. The method of claim 4, further comprising:
identifying, by the DPS, using the semantic markers, an area of the initial software architecture to apply the architectural design patterns to.

6. The method of claim 4 or 5, wherein the semantic markers follow a common ontology.

7. The method of any preceding claim, wherein each of the architectural design patterns include one or more attributes selected from the group of attributes consisting of: a name, a structural definition, a situation description of where an architectural design pattern might be appropriate, a description of the intent of the architectural design pattern.

8. The method of any preceding claim, further comprising:
determining, by the DPS, whether the selected software architecture meets one or more predefined criteria;
if the selected software architecture meets the one or more predefined criteria, performing the step of outputting the selected software architecture as the updated software architecture;
if the selected software architecture does not meet the one or more predefined criteria, performing an iterative process comprising iterating one or more times steps (a)-(d) until the selected software architecture does meet the one or more predefined criteria and then performing the step of outputting the selected software architecture as the updated software architecture, wherein
step (a) comprises modelling, based on the selected software architecture and the one or more architectural design patterns, one or more transformed selected software architectures,
step (b) comprises calculating a quality attribute for each of the transformed selected software architectures using the SQM and the set of desired attributes;
step (c) comprises selecting one of the transformed selected software architectures based on the quality attributes; and
step (d) comprises determining whether the selected software architecture meets the one or more predefined criteria.

9. The method of claim 8, wherein the pre-defined criteria specify that a difference between the quality attributes of the selected software architecture of the current iteration and the previous iteration need to be less than a threshold value.

10. The method of claim 8 or 9, wherein the iterative process comprises using a genetic algorithm.

11. The method of any preceding claim, wherein the step of modelling the one or more transformed software architectures comprises modelling a transformed software architecture to have a structure of the initial software architecture with one or more parts replaced by one or more architectural design patterns from the repository.

12. The method of any preceding claim, further comprising:
outputting, by the DPS, a changelog that defines differences between the initial software architecture and the updated software architecture.

13. The method of any preceding claim, wherein the updated software architecture is output to a transformation tool for use in a transformation processes, wherein the transformation process comprises replacing, in the system, the initial software architecture with the updated software architecture.

14. A method for software refactoring a system operating on an initial software architecture, the method comprising:
determining, by a Data Processing System, DPS, an updated software architecture for the system by performing the method of any preceding claim;
receiving, by a transformation tool, the updated software architecture;
replacing, by the transformation tool, the initial software architecture with the updated software architecture on the system; and
verifying, by the transformation tool, the integrity of the updated software architecture on the system.

15. A Data Processing System, DPS, for determining an updated software architecture from an initial software architecture, the DPS being configured to:
receive data specifying the initial software architecture;
receive a Software Quality Model, SQM, that defines attributes for assessing the quality of a software architecture for a system;
receive a set of desired attributes for the updated software architecture, the desired attributes being attributes specified in the SQM;
model one or more transformed software architectures based on the initial software architecture and one or more architectural design patterns, wherein the one or more architectural design patterns are stored in a memory location that is communicatively coupled to the DPS;
calculate a quality attribute for each of the transformed software architectures using the SQM and the set of desired attributes;
select one of the transformed software architectures based on the quality attributes; and
output the selected software architecture as the updated software architecture for the system.
